# EUROPEAN PATENT SPECIFICATION

(11) **EP 3 261 889 B1**
(45) Date of publication and mention of the grant of the patent: **04.08.2021**
(21) Application number: 16707499.6
(22) Date of filing: 23.02.2016
(51) Int. Cl.: B60T 13/68, B60T 8/17

(54) **TRAILER BRAKE SYSTEM**
ANHÄNGERBREMSSYSTEM
SYSTÈME DE FREIN DE REMORQUE

(30) Priority: 23.02.2015 GB 201502960
(43) Date of publication of application: 03.01.2018
(73) Proprietor: Knorr-Bremse Systems for Commercial Vehicles Limited, Bristol BS16 7FE (GB)
(72) Inventor: FRY, Matthew, Emersons Green Bristol BS16 7FE (GB)
(74) Representative: Moore, David Simon
(86) International application number: PCT/GB2016/000040
(87) International publication number: WO 2016/135435

(56) References cited:
- EP-A1- 2 570 317
- EP-A2- 2 717 240
- WO-A1-2011/039556
- FR-A1- 2 952 011
- GB-A- 2 499 459
- US-A1- 2005 165 531
- US-A1- 2006 232 128
- US-A1- 2012 283 925
- US-B2- 6 525 432

## Description

The present arrangement relates to a brake system in particular, but not exclusively, for a trailer vehicle or agricultural vehicle.

Existing trailer brake system valve arrangements are known from, for example, WO03011664 which discloses brakes of the front axle of the trailer of a utility vehicle are impinged upon with a brake pressure by way of a single, common ABS valve. Said ABS valve is electrically actuated by an EBS module associated with the rear wheel brakes depending on a differential slip between the front axle and the rear axle. A similar system is disclosed in EP2570317.

GB2499459 discloses a further brake system comprises a braking device capable of generating a braking force on a wheel on the trailer, a brake force into the brake cylinders being controllable by a braking ECU. The braking ECU is connected to a standards compliant communication bus on said trailer and is adapted to receive data inputs from sensors on the trailer. An interface to trailer electronics and a communications interface are also provided. The brake system is further adapted to transmit a trailer identifier such as an SSID, such that the trailer identifier can be paired with a further device, such as a mobile telephone associated with a tractor driver, the further device having previously been provided with the trailer identifier. A related system is disclosed in EP2717240

As braking systems become more sophisticated and have additional functionality such as that described in GB2499459 or levelling control, the cost of the brake system tends to increase. An additional problem is that there is increasing pressure on space on trailers due to this functionality as the additional functionality requires additional electrical and pneumatic connections for which there is little space. Trailer builders in addition do not wish to redesign the trailer if this is avoidable and so the compromises in the known systems have been perceived to have a lower reliability due to the additional external connections.

EP2121359 describes a valve adapted to provide additional raise/lower functionality to a known braking system. Although the valve disclosed in this patent provides the required raise lower functionality, its inclusion with known brake systems results in additional cost and space requirements on the trailer.

The CAN protocol uses the concept of dominant and recessive bits. If due to a component failure a device connected to the CAN starts sending continuously dominant bits, no other device on the CAN will be able to communicate on the CAN. A trailer brake system may consist of three or more electronic control units, these are typically connected together using CAN. The electronic control units can be split into two main groups, firstly safety critical systems such as the brake module and the third modulator, and the second group consisting of auxiliary systems which are not considered as safety critical such as a telematic monitoring system or a TIM.

Given the inherent failure modes of the CAN bus it can be appreciated that mixing safety critical and auxiliary systems requires special consideration. Typically, integration of auxiliary functionality into the brake system results in the use of two separate CAN buses on the brake module, the first for connection to auxiliary system and the second for connection to a third modulator for the provision of a 4S/3M brake system; Or alternatively all auxiliary systems have to be tested to the same standards as the brake system resulting in significant expense.

The invention therefore seeks to provide a system which will enable devices such as those provided by a third party to be connected to CAN without testing to the braking standard.

According to the invention there is provided a brake system for a trailer vehicle comprising a braking device capable of generating a braking force on a wheel on the trailer, a brake force into the brake cylinders being controllable by a braking ECU, which braking ECU is connected to a standards compliant communication bus on said trailer and is adapted to receive data inputs from sensors on the trailer and control a first modulator, wherein the brake system further comprises an electro pneumatic module adapted to control a further modulator independently of the first modulator, which module is adapted to receive further data inputs from sensors on the trailer via a second standards compliant communication bus, which further data can relate to auxiliary functionality, wherein the module is also connected to the braking ECU via a third standards compliant communication bus, the module acting as a firewall between the second and the third buses.

Preferably, the module is adapted to check the data inputs from the second standards compliant communication bus for integrity and to prevent data lacking integrity from being passed to the third standards compliant communication bus.

Preferably, the third standards compliant communication bus is a CAN HD bus.

Exemplary embodiments of the invention will now be described in greater detail with reference to the drawings in which:
Fig. 1 shows a pneumatic arrangement of a known trailer braking system
Fig. 2 shows a pneumatic arrangement of a braking system of the invention
Fig. 3 shows a pneumatic arrangement of a first variant of the valve;
Fig. 4 shows a pneumatic arrangement of a second variant
Fig. 5 shows a pneumatic arrangement of a third variant
Figure 6 shows the arrangement of the invention.

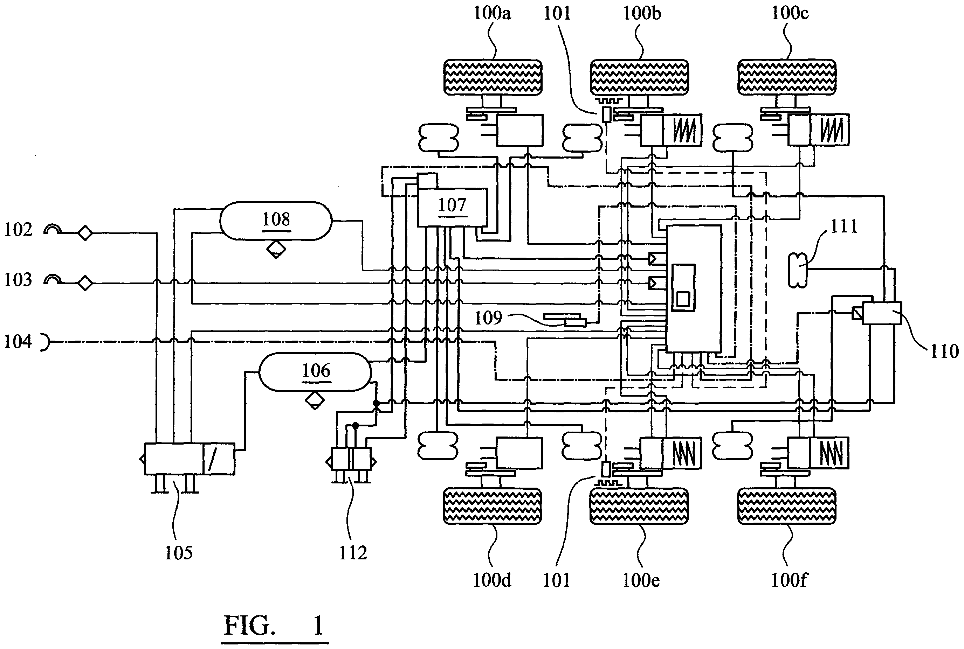

Figure 1 shows a known trailer braking system with levelling control and lift axle control. A conventional utility vehicle full trailer has a steerable front axle with front wheels and three rear axles with rear wheels 100a-f. Rotational wheel speed sensors 101 are in each case assigned to the left wheels and the right wheels and are connected by way of electric lines with an electropneumatic brake pressure control module which is primarily assigned to the rear axle brakes. One brake is in each case assigned to the left wheels and brakes to the right wheels, which brakes can be applied by means of brake cylinders of the front axle or spring-loaded brake cylinders of the rear axle.

The braking system of the trailer vehicle can be connected by way of three connections, specifically a pneumatic supply line connection 102, a pneumatic control line connection 103 and an electric control connection 104, with the braking system of a tractor or a further trailer. The electric control line is a seven pin ISO 7638 connection, which provides the ISO 11992 CAN data connection on pins 6 and 7.

The supply line connection is connected by way of a park shunt valve 105 with an air brake reservoir 106. From the air brake reservoir, a pneumatic line leads to a supply input of the pressure control module/ECU. The pressure control module is provided with an integral electronic control unit.

Furthermore, pneumatic axle load sensors or air bellows are provided at the rear axle and permit a determination of the axle load, particularly of the dynamic axle load during braking and starting. The axle load sensors or air bellows are connected by way of pneumatic lines with the levelling control.

To provide stability control a lateral acceleration sensor is provided, which may also be integrated with a yaw sensor, and the output of the lateral acceleration sensor is fed to the pressure control module/ECU. Typically the lateral acceleration sensor is integrated into the pressure control module/ECU. In the event that lateral acceleration on the trailer is detected, the pressure control module can provide for increased brake force at the front and/or rear axles. When the lateral acceleration sensor detects lateral acceleration on the trailer in which it is installed, the sensor generates a signal setting the stability control to active.

To provide levelling control, a levelling control valve 107 is provided. Due to the additional air use required in levelling control a second reservoir 108 connected to the supply is provided, which is pneumatically connected to the levelling control valve 107. The levelling control valve is further pneumatically connected to each of the air bags and controls the flow of air into and exhaust of air from the air bags.

The levelling control valve is provided with pneumatic control inputs from push buttons on a push button valve 112, the air for which is supplied by the reservoir 106. Further electrical and pneumatic control is provided from the pressure control module/electronic control unit. A levelling sensor 109 to determine the height of the trailer is electrically connected to the pressure control module/ECU.

A lift axle control valve 110 is provided, which is supplied with air from the additional reservoir and has a further pneumatic connection with the levelling control valve and a further airbag 111. An electrical connection to the pressure control module/ECU provides the control for the lift axle solenoid.

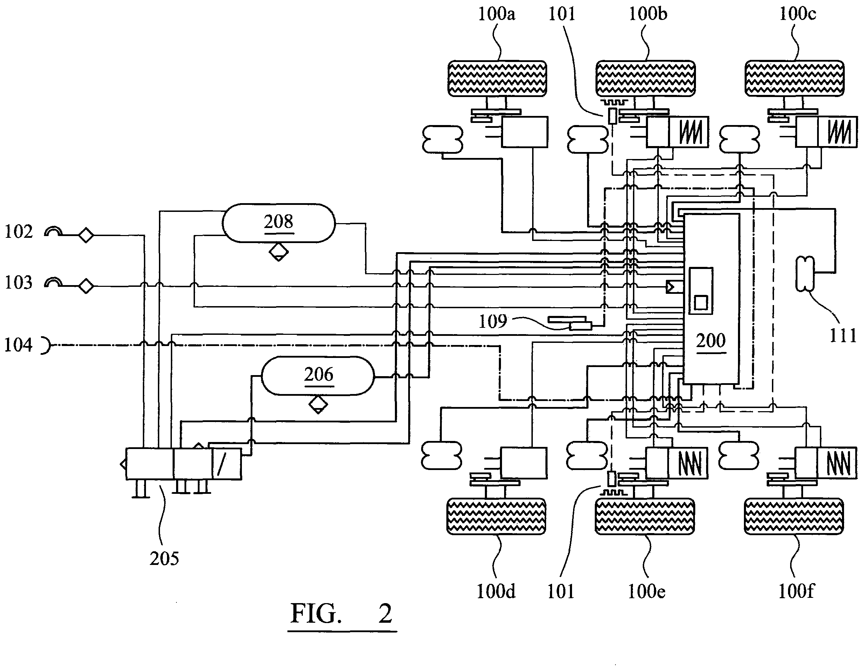

Figure 2 shows a pneumatic arrangement according to the invention. As with the arrangement the utility vehicle full trailer has three rear axles with rear wheels 110a-f. Rotational wheel speed sensors 101 are in each case assigned to the left wheels and the right wheels and are connected by way of electric lines with an electropneumatic brake pressure control module/ECU 200 which is primarily assigned to the rear axle brakes. One brake is in each case assigned to the left wheels and the right wheels, which brake can be applied by means of brake cylinders of the front axle or spring-loaded brake cylinders of the rear axle.

The braking system of the trailer vehicle can be connected by way of three connections, specifically a pneumatic supply line connection 102, a pneumatic control line connection 103 and an electric control connection 104, with the braking system of a tractor or a further trailer. The electric control line is a seven pin ISO 7638 connection, which provides the ISO 11992 CAN data connection on pins 6 and 7.

The supply line connection is connected by way of a park shunt valve with push button controls 205 with a first air brake reservoir 206 and a second reservoir 208. From the air brake reservoir 206, a pneumatic line leads to a supply input of the pressure control module/ECU. The second reservoir 208 is provided with first and second pneumatic inputs to the pressure control module/ECU. Further two pneumatic inputs are provided directly from the park shunt valve with push buttons and charging valve 205 to the pressure control module/ECU 200. The pressure control module is provided with an integral electronic control unit. The reservoir is provided with first and second pneumatic connections with the pressure control module/ECU to provide additional air flow capacity to the inlet ports 11 and 12 for the relay valves.

Furthermore, pneumatic axle load sensors or air bellows are provided at the rear axle and permit a determination of the axle load, particularly of the dynamic axle load during braking and starting. The axle load sensors or air bellows are connected by way of pneumatic lines with the pressure control module. The air bag for the lift axle control is also directly controlled from the pressure control module/ECU 200.

To provide levelling control, a levelling control sensor 109 is provided, the output of which is fed to the pressure control module/ECU. In use, the pressure control module/ECU 200 then controls the flow of air into the air bags to raise and lower the trailer in accordance with the user inputs from the push buttons or alternatively in accordance with any instructions received from a remote device via the CAN bus.

As can be readily visible from Figure 2, the arrangement of the invention results in greatly simplified pneumatic and electrical connections compared with the known approach.

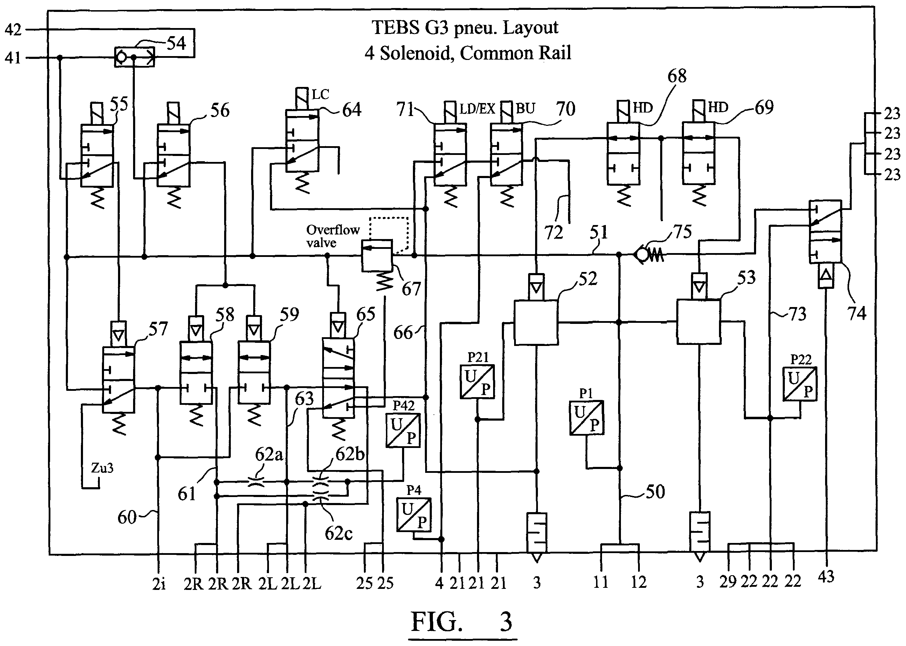

Figure 3 shows a pneumatic arrangement of the brake valve having two modulators. The valve arrangement is provided with a pneumatic input via the ports 11 and 12, which are connected to the trailer reservoir (not shown) to enable air flow into the valve. The inlet ports 11 and 12 are connected to conduit 50, which leads to a common rail conduit 51. The conduit 50 is also pneumatically connected to EBS relay valves 52, 53 and well as pressure transducer PI, which measures the pressure on the inlet conduit to provide a control signal for the valve control electronics.

The pneumatic arrangement controls the levelling function, the lift axle and the electronic braking system. The solenoids operable to control these functions are each connected to the common rail conduit 51.

The levelling control is provided with an air suspension raise input 41 in pneumatic connection with a first solenoid 55 and an air suspension lower input 42 which is in pneumatic connection with the raise input 41 and the first solenoid 55 via a double check valve 54. The double check valve 54 is also connected with a second solenoid 56. The raise and lower solenoids are connected with the common rail 51. The first solenoid 55 is connected to the pilot input of the levelling exhaust valve 57, which exhaust is further in pneumatic connection with the common rail 51.

The second valve 56 is connected to the control ports of first levelling hold valve 58 and second levelling hold valve 59. The first and second levelling hold valves are connected to a conduit 60 in communication with port 2i, which is the suspension control by an external valve for two point levelling control. The conduit 60 is connected to the exhaust valve 57 to enable the hold valves 58 and 59 to be exhausted via valve 57.

Each of the hold valves is connected to a respective two air suspension bellows on the trailer 2R and 2L. Thus the first hold valve 58 controls the right side air bellows and the second hold valve 59 controls the left side air bellows. The conduit 61 from the right hand hold valve 58 to its respective bellows is connected via choke 62a to the conduit 63 from the second hold valve 59 to its respective bellows. Transducer 42 is connected to this conduit to provide an electronic control signal, which in turn is connected via choke 62b to the conduit 63 and via choke 62c to the conduit 61. To facilitate lift axle control, the third set of bellows on the left and right is controlled by the lift axle control described in detail below.

The lift axle control 3/2 solenoid 64 is also connected to the common rail 51, an output of which solenoid 64 pilots the liftaxle air pilot valve 65 which is also in fluid communication with the common rail 51. A further output of the lift axle solenoid is connected to the exhaust conduit 66 of the EBS solenoids as described below. An output of the valve 65 is connected via conduit 63 with the air suspension bellows 2L and 2R and a further output of the valve 65 is connected to first and second lift bellows 25 to provide the lift axle control. The valve 65 is also connected to the exhaust conduit 66 which leads to exhaust port 3.

The common rail 51 is provided with an overflow valve 67, which is biased against the lift axle control and levelling control so that the braking function is always given priority with respect to available air pressure.

The EBS functionality is provided by first and second hold solenoids 68, 69 and load exhaust valve 71 and back up valve 70. The back up valve 70 is connected to the main brake pressure inlet 4, which is also provided with a pressure transducer P4. The back up valve 70 is further connected to each of the hold solenoids 68, 69 via conduit 72 and to the load exhaust solenoid 71. The load exhaust solenoid is provided with connections to the common rail 51 and the conduit 66. The hold solenoid 68 is connected to the pilot port of the relay valve 52 and the solenoid 69 is connected to the pilot port of the relay valve 53.

The relay valve 52 is connected to the exhaust 3 and also to the three brake delivery ports 21 and is provided with a pressure transducer 21 in that conduit to the ports 21 to measure the delivery pressure. The relay valve 53 is connected to a separate exhaust 3 and via conduit 73 to the three brake delivery ports 22. A pressure transducer P22 is provided to measure the pressure in the conduit to the ports 22. A test port 29 is also provided here to provide a test port for measuring brake pressure.

The emergency relay park valve 74 is also in fluid communication with conduit 73 and is connected by a check valve 75 to the common rail 51. The valve 74 provides the delivery pressure to the spring park brake ports 23 and is piloted by park brake / emergency pressure input 43.

The valve is provided with four electrical connectors. The first connector is a 7 pin ISO 7638 connector to the tractor. The pins are provided with the following functions: 1 battery; 2 ignition; 3 electronic ground; 4 valve ground; 5 warning light; 6 CAN high; 7 CAN low.

The second connector is a 12 pin connector for auxiliary function input output (AuxIO). With this connector, pins are assigned to the stop light, a 5V CAN bus to enable communication to components such as a Trailer Info-Module such as the Applicant's TIM or Haldex's Info-centre ®; pins are further assigned to the power supply and the remaining pins are available for AuxIO.

The third connector is a 6 pin connector with pins for power and CAN connections to 3^{rd} and 4^{th} modulators if they are required by the trailer builder and wheel speed sensors. The fourth connector is a further 6 pin connector with pins assigned to an analogue to digital convertor and AuxIO controls for auxiliary functions.

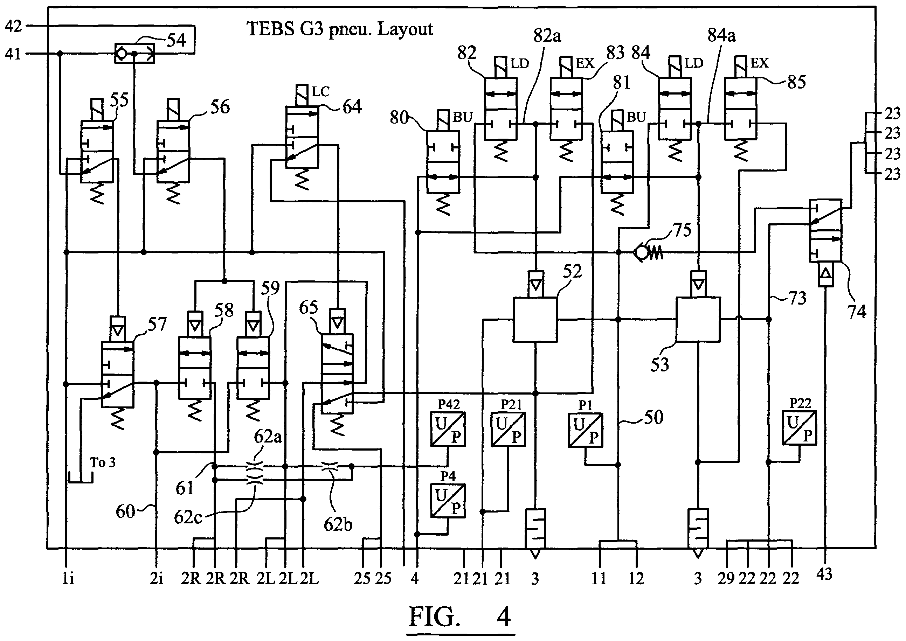

Figure 4 shows a second variant of the valve having 6 solenoids to provide 3 modulators for a 4S/3M brake system.

The functionality of the electronic level control and the lift axle control as well as the park valve is essentially the same as described with respect to Figure 3 where the same parts are labelled with the same reference numbers.

The arrangement of the braking solenoids will now be described in greater detail. As with the embodiment of Figure 3, the valve arrangement of Figure 4 is provided with a pneumatic input via the ports 11 and 12, which are connected to the trailer reservoir (not shown) to enable air flow into the valve. The inlet ports 11 and 12 are connected to conduit 50. The conduit 50 is also pneumatically connected to EBS relay valves 52, 53 and well as pressure transducer PI, which measures the pressure on the inlet conduit to provide a control signal for the valve control electronics.

The conduit 50 branches and provides the inlet pressure to first and second load solenoids 82, 84, which solenoids are pneumatically connected to a respective first and second exhaust solenoid 83, 85 via respective conduits 82a and 84a. The first exhaust solenoid is exhausted via a common path with the relay valve 52 and the auxiliary functions. The second solenoid is exhausted via a common path with the relay valve 53.

Two back up valves 80 and 81 are provided, each of which back up valves is connected to the main brake pressure inlet 4, which is also provided with a pressure transducer P4. The back up valves 80, 81 are further connected to conduits 82a and 84a, each of which is also in pneumatic connection with the control ports of the respective relay valves 52 and 53.

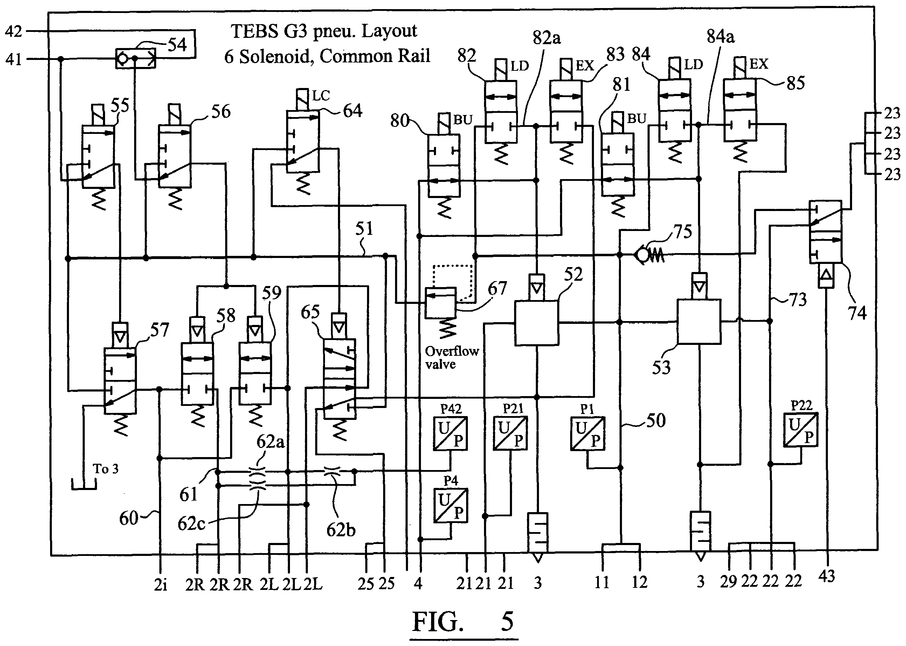

Figure 5 shows an alternative to the arrangement of Figure 4. As with the embodiment of Figure 3 and Figure 4, the valve arrangement of Figure 5 is provided with a pneumatic input via the ports 11 and 12, which are connected to the trailer reservoir (not shown) to enable air flow into the valve. The inlet ports 11 and 12 are connected to conduit 50. The conduit 50 is also pneumatically connected to EBS relay valves 52, 53 and well as pressure transducer PI, which measures the pressure on the inlet conduit to provide a control signal for the valve control electronics.

The conduit 50 leads to the common rail 51 and provides the inlet pressure to first and second load solenoids 82, 84, which solenoids are pneumatically connected to a respective first and second exhaust solenoid 83, 85 via respective conduits 82a and 84a. The first exhaust solenoid is exhausted via a common path with the relay valve 52 and the auxiliary functions. The second solenoid is exhausted via a common path with the relay valve 53.

Two back up valves 80 and 81 are provided, each of which back up valves is connected to the main brake pressure inlet 4, which is also provided with a pressure transducer P4. The back up valves 80, 81 are further connected to conduits 82a and 84a, each of which is also in pneumatic connection with the control ports of the respective relay valves 52 and 53.

The levelling control is provided with an air suspension raise input 41 in pneumatic connection with a first solenoid 55 and an air suspension lower input 42 which is in pneumatic connection with the raise input 41 and the first solenoid 55 via a check valve 54. The check valve 54 is also connected with a second solenoid 56. The raise and lower solenoids are connected with the common rail 51. The first solenoid 55 is connected to the pilot input of the levelling exhaust valve 57, which exhaust is further in pneumatic connection with the common rail 51.

The second valve 56 is connected to the control ports of first levelling hold valve 58 and second levelling hold valve 59. The first and second levelling hold valves are connected to a conduit 60 in communication with port 2i, which is the suspension control by an external valve for two point levelling control. The conduit 60 is connected to the exhaust valve 57 to enable the hold valves 58 and 59 to be exhausted via valve 57.

Each of the hold valves is connected to a respective two air suspension bellows on the trailer 2R and 2L. Thus the first hold valve 58 controls the right side air bellows and the second hold valve 59 controls the left side air bellows. The conduit 61 from the right hand hold valve 58 to its respective bellows is connected via choke 62a to the conduit 63 from the second hold valve 59 to its respective bellows. Transducer 42 is connected to this conduit to provide an electronic control signal, which in turn is connected via choke 62b to the conduit 63 and via choke 62c to the conduit 61. To facilitate lift axle control, the third set of bellows on the left and right is controlled by the lift axle control described in detail below.

The lift axle control 3/2 solenoid 64 is also connected to the common rail 51, an output of which solenoid 64 pilots the liftaxle air pilot valve 65 which is also in fluid communication with the common rail 51. A further output of the lift axle solenoid is connected to the exhaust conduit 66 of the EBS solenoids as described below. An output of the valve 65 is connected via conduit 63 with the air suspension bellows 2L and 2R and a further output of the valve 65 is connected to first and second lift bellows 25 to provide the lift axle control. The valve 65 is also connected to the exhaust conduit 66 which leads to exhaust port 3.

The common rail 51 is provided with an overflow valve 67, which is biased against the lift axle control and levelling control so that the braking function is always given priority with respect to available air pressure.

In known systems, three CAN buses are provided. The first CAN is the connection between the truck and the trailer according the ISO 11992 standard. The second CAN is the brake CAN for connecting to a third brake modulator in a 4S/3M system as it is safety critical. The third CAN is a trailer internal (TI CAN) for auxiliary functions. Such an arrangement advantageously provides-a both electrical isolation and a firewall between the safety critical data on the ISO 11992 and Brake CAN buses and the TI CAN which may be connected to any suitable electrical equipment without the need for special safety considerations or certifications. This arrangement suffers from the disadvantage of such an arrangement is the requirement for an additional CAN bus controller on the micro controller and two electrical pins that are unable to be repurposed when not required. Unused pins are undesirable on a trailer as they are exposed to inclement weather and over time water can ingress the micro controller via capillary action on the unused pins. Moreover, such a firewall arrangement is only required on trailers that have a 4S3M or 6S3M arrangement, which typically accounts for 20% of the market, thus such arrangement add cost and complexity to product which is only required part of the time.

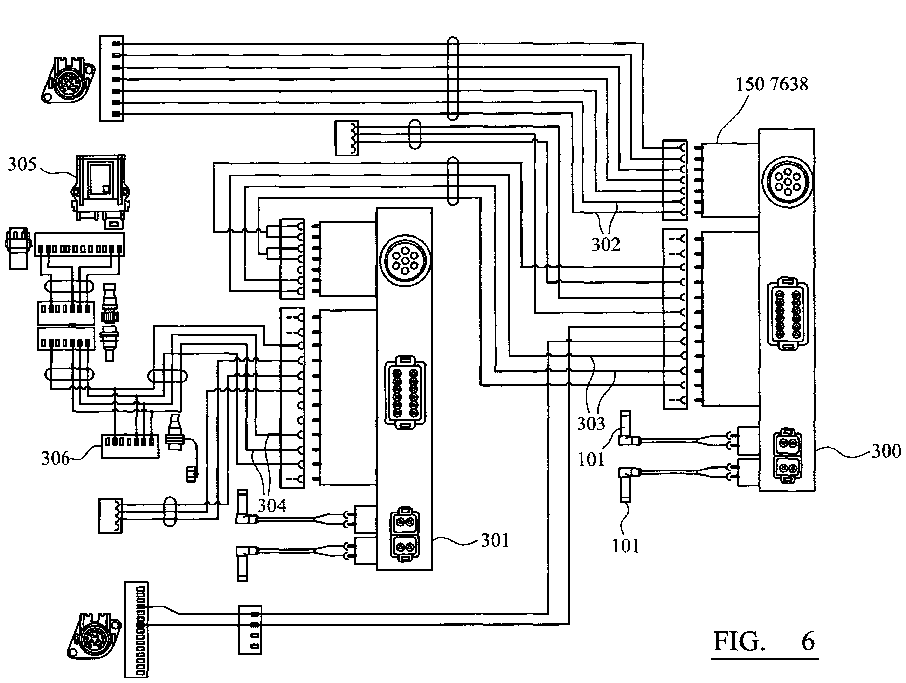

Figure 6 shows the arrangement of the invention when used in a 4S3M or 6S3M system, comprising a first TEBS 300 (pressure control module/ECU) being a 2S/2M or 4S2M system having a first ISO 11992 CAN connection 302 to the tractor via two pins on the ISO7638 connection and a second electropneumatic module 301 which acts as a single channel modulator, which is connected by means of two pins to the TI CAN 303 for auxiliary functions on the 12 pin connector. The TEBS 300 and module 301 are connected by way of the CAN bus 303 configured to communicate at a higher baud rate capable of being certified to SIL2. This CAN bus 303 carries both safety critical and auxiliary data, but as both communication nodes on the bus are designed and manufactured by the brake system manufacturer the integrity of the combination can be assured.

The module 301 is then further connected by means of a T1 CAN 304 to various auxiliary functional devices such as the trailer access point 305 and tyre pressure monitoring system 306. The software on these devices lies outside of the firewall provided by the module 301 and thus need not be certified to the same safety integrity level. In turn this enables parties other than the brake system manufacturer to provide software on these devices without any adverse effect on the safety critical brake system. An exemplary trailer access point is disclosed in GB2499460.

In this arrangement the module 301 provides both electrical isolation preventing dominant bits from disabling the safety critical CAN bus and acts as firewall by ensuring that third party data cannot affect adversely the data going to the TEBS module 300. In this exemplary embodiment, the module 301 filters the incoming data on the CAN 304 against a white list and by means of a time filter to ensure that only authorised data is allowed through to the TEBS module 300.

Although specifically described in relation to a trailer, the braking system would also be applicable in an agricultural vehicle.

## Claims

1. A brake system for a trailer vehicle comprising a braking device capable of generating a braking force on a wheel on the trailer, a brake force into the brake cylinders being controllable by a braking ECU (300), which braking ECU (300) is connected to a standards compliant communication bus (302) on said trailer and is adapted to receive data inputs from sensors on the trailer and control a first pressure modulator, wherein the brake system further comprises an electro pneumatic module (301), wherein the module (301) is adapted to receive further data inputs from sensors (305,306) on the trailer via a second standards compliant communication bus (304), which further data can relate to auxiliary functionality, wherein the module (301) is also connected to the braking ECU (301) via a third standards compliant communication bus (303), **characterized in that** the module (301) is acting as a firewall between the second and third buses.

2. A brake system according to Claim 1, wherein the module (301) is adapted to check the data inputs from the second standards compliant communication bus (304) for integrity and to prevent data lacking integrity from being passed to the third standards compliant communication bus (303).

3. A brake system according to Claim 1 or Claim 2, wherein the third standards compliant communication bus (303) is a CAN HD bus.

4. A brake system according to any one of Claims 1 to 3, wherein the module (301) is adapted to control a further modulator independently of the first modulator.

5. A brake system according to any one of Claims 1 to 4, wherein the module (301) provides both electrical isolation to prevent dominant bits from disabling the CAN bus (302) and acts as firewall by ensuring that third party data cannot affect adversely the data going to the TEBS module 300

6. A brake system according to any one of Claims 1 to 5, wherein the braking ECU (300) and module (301) are connected by way of the CAN bus (303) configured to communicate at a higher baud rate capable of being certified to SIL2

7. A brake system according to any one of Claims 1 to 6, wherein the ECU (300) is a 2S/2M or 4S2M system having a first ISO 11992 CAN connection 302 to the tractor via two pins on an ISO7638 connection and the second electropneumatic module (301) which acts as a single channel modulator, which is connected by means of two pins to the bus (303) for auxiliary functions on the 12 pin connector.

## Patentansprüche

1. Ein Bremssystem für ein Anhängefahrzeug umfassend eine Bremseinrichtung, die in der Lage ist, eine Bremskraft auf ein Rad des Anhängers zu erzeugen, wobei eine Bremskraft in die Bremszylinder durch eine Brems-ECU (300) steuerbar ist, und wobei die Brems-ECU (300) mit einem normgerechten Kommunikationsbus (302) an dem Anhänger verbunden und darauf ausgelegt ist, Dateneingaben von Sensoren an dem Anhänger zu empfangen und einen ersten Druckmodulator zu steuern, wobei
das Bremssystem weiter ein elektropneumatisches Modul (301) umfasst, wobei das Modul (301) darauf ausgelegt ist, weitere Dateneingaben von Sensoren (305, 306) an dem Anhänger über einen zweiten normgerechten Kommunikationsbus (304) zu empfangen, wobei diese weiteren Daten sich auf Hilfsfunktionen beziehen können und wobei das Modul (301) über einen dritten normgerechten Kommunikationsbus (303) auch mit der Brems-ECU (301) verbunden ist,
**dadurch gekennzeichnet, dass** das Modul (301) als Firewall zwischen dem zweiten und dritten Bus fungiert.

2. Ein Bremssystem nach Anspruch 1, wobei das Modul (301) darauf ausgelegt ist, die Dateneingaben vom zweiten normgerechten Kommunikationsbus (304) auf ihre Integrität zu prüfen und zu verhindern, dass Daten von mangelnder Integrität an den dritten normgerechten Kommunikationsbus (303) geleitet werden.

3. Ein Bremssystem nach Anspruch 1 oder Anspruch 2, wobei der dritte normgerechte Kommunikationsbus (303) ein CAN-HD-Bus ist.

4. Ein Bremssystem nach einem der Ansprüche 1 bis 3, wobei das Modul (301) darauf ausgelegt ist, einen weiteren Modulator unabhängig vom ersten Modulator zu steuern.

5. Ein Bremssystem nach einem der Ansprüche 1 bis 4, wobei das Modul (301) einerseits eine elektrische Isolierung bereitstellt, die verhindert, dass dominante Bits den CAN-Bus (302) deaktivieren, und andererseits als Firewall fungiert, indem es sicherstellt, dass Dateien von Dritten keinen negativen Einfluss auf die an das TEBS-Modul (300) geschickten Daten hat.

6. Ein Bremssystem nach einem der Ansprüche 1 bis 5, wobei die Brems-ECU (300) und das Modul (301) über einen CAN-Bus (303) verbunden sind, der so konfiguriert ist, dass er mit einer höheren Baud-Rate arbeitet, die eine Zertifizierung nach SIL2 ermöglicht.

7. Ein Bremssystem nach einem der Ansprüche 1 bis 1 to 6, wobei die ECU (300) ein 2S/2M- oder 4S1M-System ist, das über zwei Stifte eines ISO7638-Anschlusses einen ersten CAN-Anschluss (302) nach ISO 11992 zum Zugfahrzeug sowie ein zweites elektropneumatisches Modul (301) besitzt, welches als Ein-Kanal-Modulator fungiert, das mittels zweier Stifte auf dem 12-Pol-Konnektor mit dem Bus (303) für Hilfsfunktionen verbunden ist.

## Revendications

1. Système de frein pour un véhicule à remorque comprenant un dispositif de freinage capable de générer une force de freinage sur une roue sur la remorque, une force de frein dans les cylindres de frein pouvant être commandée par un bloc de commande électronique de freinage (300), lequel bloc de commande électronique de freinage (300) est connecté à un bus de communication conforme aux normes (302) sur ladite remorque et est adapté à recevoir des entrées de données de capteurs sur la remorque et commander un premier modulateur de pression, dans lequel le système de frein comprend en outre un module électropneumatique (301), dans lequel le module (301) est adapté à recevoir d'autres entrées de données de capteurs (305, 306) sur la remorque par le biais d'un deuxième bus de communication conforme aux normes (304), lesquelles autres données peuvent concerner une fonctionnalité auxiliaire, dans lequel le module (301) est également connecté au bloc de commande électronique de freinage (300) par le biais d'un troisième bus de communication conforme aux normes (303), **caractérisé en ce que** le module (301) agit comme pare-feu entre les deuxième et troisième bus.

2. Système de frein selon la revendication 1, dans lequel le module (301) est adapté à vérifier l'intégrité des entrées de données provenant du deuxième bus de communication conforme aux normes (304) et à empêcher des données dépourvues d'intégrité d'être transmises au troisième bus de communication conforme aux normes (303).

3. Système de frein selon la revendication 1 ou la revendication 2, dans lequel le troisième bus de communication conforme aux normes (303) est un bus CAN HD.

4. Système de frein selon l'une quelconque des revendications 1 à 3, dans lequel le module (301) est adapté à commander un autre modulateur indépendamment du premier modulateur.

5. Système de frein selon l'une quelconque des revendications 1 à 4, dans lequel le module (301) fournit à la fois une isolation électrique pour empêcher des bits dominants de désactiver le bus CAN (302) et agit comme pare-feu en garantissant que des données tierces ne peuvent affecter défavorablement les données allant vers le module TEBS 300.

6. Système de frein selon l'une quelconque des revendications 1 à 5, dans lequel les bloc de commande électronique de freinage (300) et module (301) sont connectés au moyen du bus CAN (303) configuré pour communiquer à un débit en baud supérieur capable d'être certifié en SIL2.

7. Système de frein selon l'une quelconque des revendications 1 à 6, dans lequel le bloc de commande électronique de freinage (300) est un système 2S/2M ou 4S2M ayant une première connexion CAN ISO 11992 302 vers le tracteur par le biais de deux broches sur une connexion ISO7638 et le second module électropneumatique (301) qui agit en tant que modulateur à voie unique, qui est connecté au moyen de deux broches au bus (303) pour des fonctions auxiliaires sur le connecteur 12 broches.
